# EUROPEAN PATENT SPECIFICATION

(11) **EP 2 323 495 B1**
(45) Date of publication and mention of the grant of the patent: **09.05.2012**
(21) Application number: 09794686.7
(22) Date of filing: 16.06.2009
(51) Int. Cl.: A23C 11/04, A23F 5/40, A23F 3/30, A23G 1/56

(54) **FOAMING COMPOSITION**
SCHÄUMERZUSAMMENSETZUNG
COMPOSITION MOUSSANTE

(30) Priority: 16.06.2008 EP 08158351
(43) Date of publication of application: 25.05.2011
(73) Proprietor: Campina Nederland Holding B.V., 5301 LB Zaltbommel (NL)
(72) Inventor: Verkerk, Arjan Willem, NL-3824 AN Amersfoort (NL)
(74) Representative: Swinkels, Bart Willem
(86) International application number: PCT/NL2009/050347
(87) International publication number: WO 2010/005297

(56) References cited:
- EP-A- 0 154 192
- EP-A- 0 885 566
- WO-A-00/44238
- WO-A-03/041506
- WO-A-2006/022540
- US-A- 6 129 943

## Description

The present invention pertains to a foaming composition for use in beverages such as coffee drinks of the cappuccino type.

### Background

Instant powders that upon dissolution produce foaming beverages are well known. Usually these powders are a dry mix of a soluble beverage powder and a soluble foamer. The soluble foamer contains vacuoles that contain gas which, upon dissolution of the powder, produce foam. Upon the addition of (hot) water or milk, a beverage is formed, which has a foam on its upper surface. Such soluble foamers are often combined with coffee powders, coffee or tea extracts, chocolate powders or instant soup powder and are thus suitable for preparing ready-to-drink beverages such as cappuccino. Over the years, an increasing demand for these types of dry, particulate soluble foamers has led to the development of various types of soluble foamers.

EP 0885566 (Nestlé) discloses a cappuccino foamer containing, on a dry weight basis, 10-30% (20-25%) non-fat milk solids, 5-20% (10-15%) sweet whey, 5-25% (10-20%) of (vegetable) fat and 30-70% (40-50%) of carbohydrate sweetener, and further flavours and the like. According to the examples of in EP 0885566, a whey protein to casein weight ratio of about 0.4 is used.

US 6,168,819 (Kraft) discloses a cappuccino foamer containing, on a dry weight basis, 3-30% (10-15%) whey protein, 5-50% (25-35%) fat, 20-92% (30-55%) of carbohydrates (carrier), and further optional emulsifiers, surfactants etc. The whey protein is denatured for 40-90% (60-75%).

US 6,129,943 (Kraft) discloses a dry cappuccino foamer containing, on a dry weight basis, 1-30% (10-20%) whey protein, 0-30 (10-15%) fat, 20-90% (50-70%) of gasified carbohydrates (carrier).

EP 813815 (Kraft) describes a foaming creamer containing 20-40% (10-20%) milk protein, 5-60 (15-25%) fat, 10-75% (30-55%) of carbohydrates (carrier).

WO 03/041506 describes a low-fat, high-protein whitener.

The prior art foaming compositions have a drawback in that they use relatively expensive ingredients rendering large scale production less economically attractive.

It is therefore an object of the present invention to provide a foaming composition which can be produced more cost-effectively than the prior art compositions, while maintaining or possibly improving foam characteristics.

### Summary of the invention

It was found that a composition having excellent foaming performance can be provided by lowering the protein level to well below 10 %, on a dry weight basis, while using a specific whey protein to casein weight ratio. This finding is contrary to current assumptions that high protein levels of well above 10% are essential for obtaining sufficient foam height and stability.

### Detailed description

Thus the invention pertains to a foaming composition for hot and cold beverages and other liquid or semi-liquid food products, such as coffee, cocoa, milk, tea, soup and sauces, comprising, on a dry weight basis, fats, carbohydrates and proteins, characterised by a protein content, on a dry weight basis, of between 3 and 9%, and a whey protein to casein weight ratio between 0.4 and 1.0.

The low protein content is an important characteristic of the composition of the invention. Preferably, the protein content, on a dry weight basis, is at least 4%, and/or up to 8%, more preferably at least 4.5% or even at least 5%, and/or up to 7% protein.

The protein component of the composition consists at least partly of milk protein, in particular for at least 60%, more in particular for at least 80%. The remainder can be other animal protein, e.g. egg protein, or vegetable protein, such as soy protein. The total milk protein content, on dry weight basis, is preferably at least 3%, more preferably at least 4 %, most preferably at least 4.5%, up to e.g. 8 %, or especially up to 7%.

It is preferred, for good foaming characteristics, that the milk protein comprises a certain level of casein. Preferably, the proportion of casein in the milk protein component of the composition of the invention is lower than in total milk protein, which is in the order of 77 % (whey protein to casein ratio of about 0.29). Total milk protein is defined herein as being substantially equivalent to skim milk (powder), also referred to as skim milk solids. Specifically, the whey protein to casein weight ratio in the foaming composition of the invention is between 0.4 and 1.0, more specifically at least 0.5, especially at least 0.6, up to preferably 0.95, more preferably to 0.9. Best results are obtained with a whey protein to casein weight ratio of between 0.7 and 0.85.

In a preferred embodiment, the composition of the invention may comprise skim milk solids and whey protein concentrate (WPC). Preferably, the whey protein concentrate has a protein content of more than 20 wt. %, preferably more than 25 % (w/w). Whey protein concentrates or isolates having high protein content may be used but are not especially required. Therefore, preferred WPC's have a protein content of lower than 90 wt. %. Most preferred WPC's comprise WPC 30, WPC 35. WPC 60, WPC 80 or mixtures thereof.

In another preferred embodiment, the composition of the invention comprises less than 15 % (w/w), but preferably more than 7.0 % (w/w) skim milk solids drawn to the total dry weight of the composition of the invention.

In a preferred embodiment leading to optimum foaming results, the solubility index of at least the milk protein of the foaming composition, as determined by the NSI (Nitrogen Solubility Index: ISO 15323 - IDF 173:2002) at the pH of the foaming composition, is high. Preferably the NSI is 70 or higher, more preferably 80 of higher. NSI is measured at pH 7.3 in a 10 % w/w solution of the foaming composition.

Another relevant factor in the foaming composition of the invention is the level of lactose. Too high lactose levels may cause solubility problems due to limited solubility of lactose. The lactose level should preferably be lower than found in whey. Preferably, the whey protein to lactose weight ratio is at least 0.2, more preferably at least 0.24, most preferably at least 0.27, up to e.g. 0.5, preferably up to 0.4, most preferably up to 0.36. In absolute terms, the lactose level of the foaming composition, on a dry weight basis, is less than 10%, preferably between 5 and 9%.

In addition to or instead of lactose, the foaming composition contains other carbohydrates. Preferably the other carbohydrates at least partly have a sweetening effect, but may also serve as a bulking agent. Thus, the carbohydrates preferably comprise one or more of fructose, glucose, sucrose and short-chain fructans. Alternatively, the carbohydrates are digestible or non-digestible non-sweet carbohydrates, which are used in combination with an artificial (non-carbohydrate) sweetener. Further carbohydrates can be maltose, maltodextrins, or mixtures thereof with glucose, inulin, oligofructose or further carbohydrates having a stabilising effect. Especially preferred is a carbohydrate composition comprising glucose syrup having a DE (dextrose equivalent) of at least 20 up to e.g. 50, especially of from 30 to 40. The lactose to total carbohydrate weight ratio is preferably below 0.25, in particular between 0.10 and 0.20, more preferably 0.12 to 0.18. The level of glucose and glucose oligomers (= glucose syrup) is preferably between 20 and 60 wt.%, more preferably 35-55 wt.% of the foaming composition. The total carbohydrate content, i.e. including any lactose, is preferably between 25 and 70 wt.% (dry) of the foaming composition, more preferably 30-65, most preferably 40-60 wt.%.

The foaming composition according to the invention further contains fats, preferably vegetable fats. Preferred examples of fat types comprise soy, palm or coconut oil. Especially preferred are so-called lauric fats, i.e. fats having a relatively high level of C12 and C14 fatty acids, mostly more than 40 wt. %. Suitable examples are coconut oil, palm kernel oil, and hardened coconut or palm kernel oil, and fractionated, non-hydrogenated coconut or palm kernel oil, or mixtures thereof. The fat level, on a dry weight basis of the foaming composition, is preferably at least 15 %, more preferably a least 20%, most preferably at least 25% or even at least 28%, up to e.g. 60%, preferably up to 50%, more preferably up to 45%, most preferably up to 40%. In a preferred embodiment, the proportion of lauric fats is at least 50% of the fat component. On fatty acid basis, the proportion of medium-chain fatty acids (C₈-C₁₄) is preferably at least 35% (w/w), up to e.g. 98%, more preferably between 45 and 95%, most preferably between 55 and 90 % (w/w). The proportion of C₁₂ and C₁₄ fatty acids is preferably between 30 and 80%, more preferably between 40 and 75%. The level of unsaturated fatty acids is preferably below 50%, more preferably below 30% (w/w). The level of trans fatty acids should be low, preferably lower than 1% of the fat component.

The foaming composition can further contain minor (<10%) components, such as salts or other minerals, in particular buffering salts, e.g. dipotassium phosphate or disodium phosphate, or free flowing agents, like tricalcium phosphate or silicon dioxide. Preferably the amount of dipotassium phosphate and/or disodium phosphate in the foaming composition is between 0.1 % and 5.0 %, more preferably between 0.3 % and 4.0 %, more preferably between 1.5 % and 3.0 %, all on w/w basis.

The foaming composition preferably has a tapped bulk density of between 100 and 400 g/L, preferably between 150 and 300 g/L, more preferably between 180 and 250 g/L. The foaming composition has a pH value of 6.8 or higher, preferably 7.0 or higher, more preferably 7.2 or higher, up to pH 7.5, preferably up to 7.4, more preferably up to 7.3.

The invention further relates to a process of preparing a dry foaming composition, comprising mixing fats, carbohydrates and proteins in an aqueous medium in such a manner that, on a dry weight basis, a protein content of between 3 and 9 %, and a whey protein to casein ratio of between 0.4 and 1.0 is obtained; homogenising, introducing a gas in the mixture and drying it. The foaming composition can be prepared following methods known to the skilled person. In general the components as detailed above are mixed, homogenised and heated, followed by introducing a gas such as nitrogen or carbon dioxide into the liquid composition and then spray-drying. In a preferred embodiment, at least one of the proteins used as defined above is added to the mixture in liquid form. In a preferred embodiment, the at least one protein is skim milk solids and is added as a liquid skim milk protein concentrate; more preferred, the liquid skim milk protein concentrate has a solids content of 20 - 55 % w/w, most preferred between 30 - 40 % wt/wt.

The bulk density of the dry foaming composition can be controlled by adjusting the pressure of the injected gas before the spray drying step.

The invention also pertains to
- a thickener and/or stabiliser, e.g. carboxymethyl cellulose, hydroxypropyl methyl cellulose, carrageenan, xanthan gum, in amounts of 0.1 - 0.8 wt. %; to impart viscosity or mouthfeel;
- one or more additional carbohydrates, e.g. maltodextrins, sucrose in amounts of 20 - 50 wt %; for additional sweetening;
- milk proteins, e.g. skim milk powders in amounts of 5 - 20 wt %; for better mouthfeel and additional whitening power;
- flavours; e.g. vanilla, chocolate, cinnamon powder, cardamom powder, chai flavour; salt (NaCl), Q.S.;
- vegetable and/or animal extracts or powders, e.g. coffee extract, cocoa powder, tea extract; or savoury powders, e.g. bouillon, soup powders and/or meat extract powders, depending on the final application
all weight percentages being on dry weight basis. a process for producing an instant beverage composition by mixing the foaming composition described before with one or more of the following ingredients, preferably at least composting the vegetable and animal extract:

The product and the process of the invention result in beverages having an attractive and tasteful foam layer. The beverages can be hot beverages such as coffee, especially of the cappuccino type, cocoa, milk, tea, soup, or cold beverages such as ice cappuccino, milk shake, cold soups, but also semi-liquid products such as sauces. The foam layer is stable for at least 30 minutes up to several hours.

### Example 1

1.1 kg Skim milk powder was dissolved in 3.9 kg water of 50°C, and 6.24 kg glucose syrup (72 % solids, DE value of 35, Syral, France) and 0.52 kg of WPC 35 (Lacprodan 35, ARLA FOODS, Denmark) was added. 3.39 kg coconut oil (GR GH 30-40, Unimills, The Netherlands) was added. The mixture was heated to 60°C. Finally 0.2 kg dipotassium phosphate was added. The final mixture was heated for 10 minutes at 80°C, homogenised in a double-stage homogeniser at 150 bar and 30 bar, respectively. Nitrogen gas was injected into the emulsion and the mixture was spray-dried to obtain a powder having a tapped bulk density of 200 g/L. Total protein content was 6.0 % and the whey protein to casein ratio was 0.8. Total carbohydrate content was 54 % (w/w) and the total lipid content was 36 %. The whey protein to lactose weight ratio was 0.33.

### Example 2

To 30.5 kg Skim milk concentrate (36 % solids), 18 litres of water, 62.4 kg glucose syrup (72 % solids, DE value of 35, Syral) and 5.19 kg of WPC 35 (Lacprodan 35) was added. 33.5 kg coconut oil (GR GH 30-40) was added. The mixture was heated to 60°C. Finally 2.0 kg dipotassium phosphate was added. The final mixture was heated for 10 minutes at 85°C, homogenised at 150/30 bar. Nitrogen gas was injected into the emulsion and the mixture was spray dried to obtain a powder having a tapped bulk density of 210 g/L. Total protein content was 6.0 % and the whey protein to casein ratio was 0.8.

### Example 3

To 27.03 kg Skim milk concentrate (36 % solids), 25 litres of water, 64.5 kg glucose syrup (72 % solids, DE value of 35, Syral) and 3.69 kg of WPC 35 (Lacprodan 35) was added. 35.05 kg coconut oil (GR GH 30-40) was added. The mixture was heated to 60°C. Finally 2.0 kg dipotassium phosphate was added. The final mixture was heated for 10 minutes at 85°C, homogenised at 150/30 bar. Nitrogen gas was injected into the emulsion and the mixture was spray dried to obtain a powder having a tapped bulk density of 210 g/L. Total protein content was 5.0 % and the whey protein to casein ratio was 0.7.

### Comparative example

In a similar experiment as above (nr. 2), a dry foaming composition was made having a low protein content but a whey protein to casein ratio of > 1.

To 22.2 kg Skim milk concentrate (36 % solids), 38 litres of water, 62.0 kg glucose syrup (72 % solids, DE value of 35, Syral, France) and 8.57 kg of WPC 35 (Lacprodan 35, ARLA FOODS, Denmark) was added. 33.7 Kg coconut oil (GR GH 30-40, Unimills, the Netherlands) was added. The mixture was heated to 60°C. Finally 2.0 kg dipotassium phosphate was added. The final mixture was heated for 10 minutes at 85°C, homogenised at 150/30 Bar. Nitrogen gas was injected into the emulsion and the mixture was spray dried to obtain a powder having a tapped bulk density of 220 g/L. Total protein content was 6.0 % and the whey protein to casein ratio was 1.53.

### Example 4

**Foam testing** of compositions of Examples 1-3 and Comparative Example.

### Ingredients:

Foaming ingredient, 15 grams
Powdered sugar, 5 grams
Hot coffee from a coffee machine (80±1°C), 100 ml.

### Apparatus and tools

Measuring spindle with a diameter of 5,6 cm and 6 holes with and diameter of 5 mm evenly distributed over the spindle base, and 1 mm from the outside diameter of the spindle base.
Beaker of 250 ml, HM, Ø 5,8 cm
Ruler, 1 mm scale

### Method

Weigh the foamer and powdered sugar in the 250 ml beaker. Cover the beaker with a tissue and blend the content thoroughly. Add 100 ml of hot coffee and stir with a spoon until the foamer is dissolved.

Place the beaker on the laboratory lift and raise the beaker till the spindle is 1-2 cm above the foam layer. After 5 minutes, allowing the foam layer to develop and stabilise, further raise the beaker to the spindle bringing the spindle into contact with the foam surface, just allowing the foam to penetrate into the holes of the spindle. Measure the foam height with the ruler between the bottom of the spindle and the borderline between coffee and foam layer in the beaker; the foam height reported in mm. The results are presented in Table 1.

**Table 1. Summary of the results**

| | Example 1 | Example 2 | Example 3 | Compar. Example |
|---|---|---|---|---|
| Protein content (%) of foaming composition | 6.0 | 6.0 | 5.0 | 6.0 |
| Whey protein/casein ratio | 0.8 | 0.8 | 0.7 | 1.53 |
| Foam height after 5 minutes (mm) | 15 | 14 | 14 | 11 |
| Foam characteristics | Fine, stable foam | Fine, stable foam | Fine, stable foam | Coarse foam |
| Taste etc. | Creamy, milky | Creamy, milky | Creamy, milky | Watery taste |

### Example 5: Instant Hot Cappuccino

| Composition: | | Wt. % |
|---|---|---|
| | • Powder according ex. 2 | 50.00 |
| | • Powdered sugar | 20.00 |
| | • Instant espresso powder | 16.00 |
| | • Skim milk powder | 6.00 |
| | • Maltodextrin Maldex 120 (Amylum) | 7.07 |
| | • HMC Walocel HM100 (Wolff Cellulosics, DE) | 0.50 |
| | • Salt | 0.40 |
| | • Vanilla Flavour SN755795 (IFF, NL) | 0.03 |

Mix the dry ingredients, empty 12.5 gram powder mix into a large cup. Pour 120 ml hot water into the cup and stir to dissolve the powder.

### Example 6: Instant Hot Chocolate

| Composition: | | wt. % |
|---|---|---|
| | • Powder according to ex. 2 | 35.01 |
| | • Powdered sugar | 31.00 |
| | • Skim milk powder | 15.00 |
| | • Maltodextrin Maldex 120.(Amylum) | 10.00 |
| | • Cocoa powder DP 70 20-22% (Gerkens Cacao bv, Cargill, NL) | 8.00 |
| | • Carrageenan Genuvisco CSM-2 (Danisco, DK) | 0.30 |
| | • Xanthan gum Grindsted 80 (Danisco, DK) | 0.30 |
| | • Salt | 0.30 |
| | • Chocolate flavour SN 755796 | 0.065 |
| | Vanilla flavour SN 755795 (IFF, NL) | 0.025 |

Mix the dry ingredients, empty 25 gram powder into a large cup or mug; pour 120 ml hot water in the cup or mug while stirring to dissolve the powder.

### Example 7: Instant Hot Tea

| Composition: | | Wt. % |
|---|---|---|
| • | Powder according ex. 2 | 50.00 |
| • | Powdered sugar | 26.60 |
| • | Maltodextrin 120 (Amylum) | 12.44 |
| • | Skim milk powder | 7.25 |
| • | Instant black tea (Finleys Tea Solutions, GB) | 2.00 |
| • | Cinnamon powder | 0.65 |
| • | CMC Walocel CRT 2000PA07.(Wolff Cellulosics, DE) | 0.50 |
| • | Salt | 0.30 |
| • | Cardamom powder | 0.20 |
| • | Chai Powder flavour (SN 755792 IFF, NL) | 0.06 |

Mix the dry ingredients; use 15.0 grams of this powder in a large cup or tea glass, pour 120 ml hot water into the cup or glass while stirring to dissolve the powder mix.

## Claims

1. A foaming composition for beverages, comprising, on a dry weight basis, fats, carbohydrates and proteins, **characterised by** a protein content, on a dry weight basis, of between 3 and 9%, and a whey protein to casein weight ratio between 0.4 and 1.0.

2. A foaming composition according to claim 1, containing, on a dry weight basis, between 5 and 7% protein.

3. A foaming composition according to claim 1 or 2, wherein the whey protein to casein weight ratio is between 0.6 and 0.9.

4. A foaming composition according to any one of claims 1-3, containing, on a dry weight basis, between 20 and 45% of fats.

5. A foaming composition according to 4, wherein said fats comprise, on a dry weight basis of all fatty acids, between 30 and 80% of C₁₂ and C₁₄ fatty acids.

6. A foaming composition according to any one of claims 1-5, containing, on a dry weight basis, between 25 and 70% of carbohydrates.

7. A foaming composition according to any one of claims 1-6, wherein the whey protein to lactose weight ratio is at least 0.24, preferably between 0.27 and 0.36.

8. A foaming composition according to any one of claims 1-7, containing, on a dry weight basis, less than 10% lactose, preferably between 5 and 9%.

9. A foaming composition according to any one of claims 1-8, having a bulk density of between 100 and 400 g/l.

10. A process of producing a foaming composition for use in beverages, comprising:
- mixing fats, carbohydrates and proteins in an aqueous medium in such a manner that, on a dry weight basis, a protein content of between 3 and 9 %, and a whey protein to casein ratio of between 0.4 and 1.0 is obtained;
- homogenising;
- introducing a gas in the mixture and
- drying.

11. A process according to claim 10, wherein at least a part of said proteins are introduced in said mixing step in a liquid form having a dry solids content of 20-55 % (w/w).

12. A process of producing an instant beverage composition comprising mixing the foaming composition according to any one of claims 1-9 or produced according to claim 10 or 11, with one or more of:
- a thickener;
- a stabiliser;
- flavours;
- a vegetable and/or animal extract or powder.

13. A process according to claim 12, wherein the vegetable and/or animal extract or powder is selected from coffee extract, cocoa powder, tea extract and savoury powders.

## Patentansprüche

1. Schäumerzusammensetzung für Getränke, welche, auf Trockengewichtsbasis, Fette, Kohlenhydrate und Proteine enthält, **gekennzeichnet durch** einen Proteingehalt, auf Trockengewichtsbasis, zwischen 3 und 9%, und ein Gewichtsverhältnis zwischen Molkeprotein und Kasein von zwischen 0,4 und 1,0.

2. Schäumerzusammensetzung nach Anspruch 1, welche, auf Trockengewichtsbasis, zwischen 5 und 7% an Protein enthält.

3. Schäumerzusammensetzung nach Anspruch 1 oder 2, bei welcher das Gewichtsverhältnis zwischen Molkeprotein und Kasein zwischen 0,6 und 0,9 beträgt.

4. Schäumerzusammensetzung nach einem der Ansprüche 1 bis 3, welche, auf Trockengewichtsbasis, zwischen 20 und 45% an Fetten enthält.

5. Schäumerzusammensetzung nach Anspruch 4, bei welcher die Fette, auf Trockengewichtsbasis, von allen Fettsäuren zwischen 30 und 80% an C₁₂ und C₁₄ Fettsäuren enthält.

6. Schäumerzusammensetzung nach einem der Ansprüche 1 bis 5, welche, auf Trockengewichtsbasis, zwischen 25 und 70% an Kohlenhydraten enthält.

7. Schäumerzusammensetzung nach einem der Ansprüche 1 bis 6, bei welcher das Gewichtsverhältnis zwischen Molkeprotein und Laktose zumindest 0,24, vorzugsweise zwischen 0,27 und 0,36, beträgt.

8. Schäumerzusammensetzung nach einem der Ansprüche 1 bis 7, welche, auf Trockengewichtsbasis, weniger als 10% Laktose, vorzugsweise zwischen 5 und 9%, enthält.

9. Schäumerzusammensetzung nach einem der Ansprüche 1 bis 8, welche eine Fülldichte zwischen 100 und 400 g/l hat.

10. Verfahren zum Herstellen einer Schäumerzusammensetzung zur Verwendung in Getränken, welches enthält:
Mischen von Fetten, Kohlenhydraten und Proteinen in einem wässrigen Medium auf eine derartige Art und Weise, dass, auf Trockengewichtsbasis, ein Proteingehalt zwischen 3 und 9% und ein Verhältnis zwischen Molkeprotein und Kasein von zwischen 0,4 und 1,0 erlangt werden;
Homogenisieren;
Einführen von einem Gas in die Mischung, und
Trocknen.

11. Verfahren nach Anspruch 10, bei welchem zumindest ein Teil der Proteine in dem Mischschritt in einer flüssigen Form eingeführt wird, welche einen Trockengehalt von 20 bis 55% (w/w) hat.

12. Verfahren zum Herstellen einer löslichen Getränkemischung, welches ein Mischen der Schäumerzusammensetzung nach einem der Ansprüche 1 bis 9, oder nach Anspruch 10 oder 11 hergestellt, enthält, mit zumindest einem aus:
einem Eindickmittel;
einem Stabilisator;
Geschmacksstoffen;
einem pflanzlichen und/oder tierischen Extrakt oder Pulver.

13. Verfahren nach Anspruch 12, bei welchem der pflanzliche und/oder tierische Extrakt oder das Pulver aus Kaffee-Extrakt, Kakaopulver, Tee-Extrakt und Geschmackspulvern ausgewählt ist.

## Revendications

1. Composition moussante pour des boissons comprenant, par rapport au poids de matières sèches des graisses, des hydrates de carbone et des protéines,
**caractérisée par**
une teneur en protéines, par rapport au poids de matières sèches comprise entre 3 et 9 %, et un rapport pondéral protéines de lactosérum/caséine compris entre 0,4 et 1,0.

2. Composition moussante conforme à la revendication 1, renfermant, par rapport au poids de matières sèches entre 5 et 7 % de protéines.

3. Composition moussante conforme à la revendication 1 ou 2, dans laquelle le rapport pondéral protéines de lactosérum/caséine est compris entre 0,6 et 0,9.

4. Composition moussante conforme à l'une quelconque des revendications 1-3, renfermant, par rapport au poids de matières sèches entre 20 et 45 % de graisses.

5. Composition moussante conforme à la revendication 4, dans laquelle les graisses renferment, par rapport au poids de matières sèches de tous les acides gras, entre 30 et 80 % d'acides gras en C₁₂ et C₁₄.

6. Composition moussante conforme à l'une quelconque des revendications 1 à 5, renfermant, par rapport au poids de matières sèches entre 25 et 70 % d'hydrates de carbone.

7. Composition moussante conforme à l'une quelconque des revendications 1 à 6, dans laquelle le rapport pondéral protéines de lactosérum /lactose est d'au moins 0,24 et de préférence compris entre 0,27 et 0,36.

8. Composition moussante conforme à l'une quelconque des revendications 1 à 7, renfermant, par rapport au poids de matières sèches, moins de 10 % et de préférence entre 5 et 9 % de lactose.

9. Composition moussante conforme à l'une quelconque des revendications 1 à 8, présentant une densité apparente comprise entre 100 et 400 g/l.

10. Procédé d'obtention d'une composition moussante destinée à être utilisée dans des boissons comprenant les étapes consistant à :
- mélanger des graisses, des hydrates de carbone et des protéines dans un milieu aqueux de façon à obtenir, par rapport au poids de matières sèches une teneur en protéines comprise entre 3 et 9 % et un rapport protéines de lactosérum/caséine compris entre 0,4 et 1,0,
- homogénéiser,
- introduire un gaz dans le mélange, et
- sécher.

11. Procédé conforme à la revendication 10, selon lequel au moins une partie des protéines est introduite dans l'étape de mélange sous une forme liquide ayant une teneur en matières solides sèches de 20-55 % (w/w).

12. Procédé d'obtention d'une composition pour boisson instantanée comprenant l'étape consistant à mélanger la composition moussante conforme à l'une quelconque des revendications 1 à 9 ou obtenue par la mise en oeuvre du procédé conforme aux revendications 10 ou 11 avec au moins :
- un agent épaississant,
- un agent stabilisant,
- des agents aromatiques,
- un extrait ou une poudre végétal(e) et/ou animal(e).

13. Procédé conforme à la revendication 12, selon lequel l'extrait ou la poudre végétal(e) et/ou animal(e) est choisi(e) parmi l'extrait de café, la poudre de cacao, l'extrait de thé, et des poudres appétentes.
